# EUROPEAN PATENT APPLICATION

(11) **EP 4 488 077 A1**
(43) Date of publication of application: **08.01.2025**
(21) Application number: 23183218.9
(22) Date of filing: 04.07.2023
(51) Int. Cl.: B60C 13/00, B60C 13/04

(54) **E-SCOOTER TIRE**

(71) Applicant: SoFlow R&D GmbH, 9230 Flawil (CH)
(72) Inventor: Neuckel, Martin, 4142 Münchenstein (CH); Hug, Manuel, 5430 Wettingen (CH); Giang, Zi Fong, 9500 Wil (CH)
(74) Representative: Glück Kritzenberger Patentanwälte PartGmbB

(57) **Abstract**

The invention relates to an e-Scooter tire (50) having an outer diameter (d_{T}) between 20 cm and 32 cm and comprising a rubber body (52) with a tread (54), side walls (56, 58) and beads (60), whereby the side walls (56, 58) comprise a reflective area (64). According to the invention a well perceptive reflective area (64) can be realized on such a small e-scooter tire by following characteristics:
the outer diameter (dₒ) of the reflective area is larger than 75% of the tire diameter (d_{T}),
the inner diameter (dᵢ) of the reflective area is at most 70% of the tire diameter (d_{T}),
the width (w) of the reflective area (64) is at least 5 mm,
a side wall portion (62) of the side walls (56, 58) carrying the reflective area (64) extends within an angle range (α) of -30 to 30 degrees to the tire plane (P), and
the size of the reflective area (64) is at least 3000 mm² for each side wall (56, 58).

## Description

The present invention relates to an E-Scooter rubber tire having an outer diameter between 20 cm and 32 cm, and comprising a rubber body with a tread and side walls and beads.

Annular reflective areas around the rotational axis of a tire are per se known for bicycles, cars and motor bikes. The provision of a reflective area of this type on a tire enhances the safety as the vehicle can be seen quite well, particularly during sunrise and sunset periods and during night.

However, a problem arises in providing reflecting areas on e-scooter wheels having an outer diameter of only 20 cm to 32 cm.

Accordingly, it is object of the present invention to provide a reflective area on an e-scooter wheel, which despite of the small tire size provides a good visual perception.

The object is solved with an e-scooter tire according to claim 1. Preferred embodiments of the invention are subject matter of the dependent claims. Advantageous embodiments of the invention are also described in the specification and in the drawings. The invention also refers to an e-scooter having such e-scooter tires.

The e-scooter tire of the invention has an outer diameter between 20 cm and 32 cm and comprises a rubber body with a tread, side walls and beads. Each side wall is provided with a reflective (annular) area, forming a ring around the rotational tire axis. According to the invention the outer diameter of the reflective area is larger than 75% of the tire diameter, whereas the inner diameter of the reflective area is at most 70% of the tire diameter. The width of the reflective area is at least 5 mm and a side wall portion of the side wall carrying the reflective area extends within an angle range of - 30 to 30 degrees to the tire plane. Finally, the overall area of the reflective area is at least 3000 mm².

With the above specific parameter combination it has revealed possible to provide an e-scooter tire comprising a reflective area on its side walls which fulfils the UNECE Regulations, Rule 88. The reflective area is perceptible in a degree, which is required for reflective areas on two-wheeled vehicles, which enhances the overall safety of the use of e-scooters equipped with such inventive e-scooter tires.

The colour of the reflective area is not limited, but should of course be bright, as e.g. silver, white, yellow, green or red, any other colour in between.

Preferably, the width of the reflective area is between 10 mm and 30 mm, particularly between 10 mm and 20 mm, particularly 15 mm, which has a good perceptibility and fits to the available side wall of the comparably small tire of an e-scooter.

The reflective area on the side walls of the tire can be generally applied by a viscous reflective coating on the side wall of the tire itself. However, in a preferred embodiment the reflective area is located on a tape which is connected to the side walls via an adhesive or chemical bonding. The reflective tape is preferably pre-fabricated and can be easily applied to both side walls of the tire with an adhesive, which can be provided on the adhesive side of the tape. The application of the tape can thus be fast in contrast to coatings which have to dry or react chemically on the side walls of the tire, which is time consuming.

Preferably, the tape comprises a fabric backing as a carrier layer comprising at least 30% cotton and at least 30% polyester, which gives the required physical and mechanical properties to the tape.

Advantageously, the tape further comprises a reflective material, the surface thereof comprising at least 60%, particularly even at least 80% glass beads forming the reflective area. The glass beads have a high reflectivity and are thus optimized as a reflective surface of the tape.

Preferably the glass beads are bonded to the fabric backing with a bonding comprising least 80% polyurethane resin, which leads to a good connection of the reflective material to the fabric backing.

The tape also may comprise colour components to give the reflective area the desired colour, which most preferably is silver, white, yellow, and light shades of other colours as green and red.

Preferably, at least the side walls of the tire are made of black rubber, so that the contrast with the bright coloured reflective area is enhanced which again increases the perceptibility of the reflective area and thus of the e-scooter in total, which increases the safety as the e-scooter can better be perceived during twilight and night.

The invention also relates to an e-scooter comprising a scooter body with two wheels, having rim wells for the mounting of a tire. According to the invention in the rim wells tires according to one of the preceding claims are mounted. As it has been mentioned above, the reflective areas on the side walls of the tires of the scooter-wheels increase the perceptibility of the e-scooter in total and thus enhance the safety in the use of the e-scooter.

Following expressions are used as synonyms: scooter - e-scooter - electric scooter; tire - tyre - e-scooter tire; wheel - e-scooter wheel; vertical - extending along the tire plane; colour layer - bright colour layer;

All percent values in this application refer to weight-percent. It is clear for the skilled person, that the above mentioned embodiments can be arbitrarily combined with each other as long as features are not excluding each other.

The invention is hereinafter described schematically by the aid of the appended drawings. In these drawings
- Fig. 1: shows a perspective view of an electric scooter,
- Fig. 2: shows a side view of a tire of the electric scooter according to Fig. 1,
- Fig. 3: shows perspective and partly sectioned view of the tire of the electric scooter of Fig. 1,
- Fig. 4: a cross section of a tape to be adhered to the tire side walls carrying the reflective area, and
- Fig. 5: an enlarged cross section of a tire part along a sidewall between tread and bead carrying the tape with the reflective area.

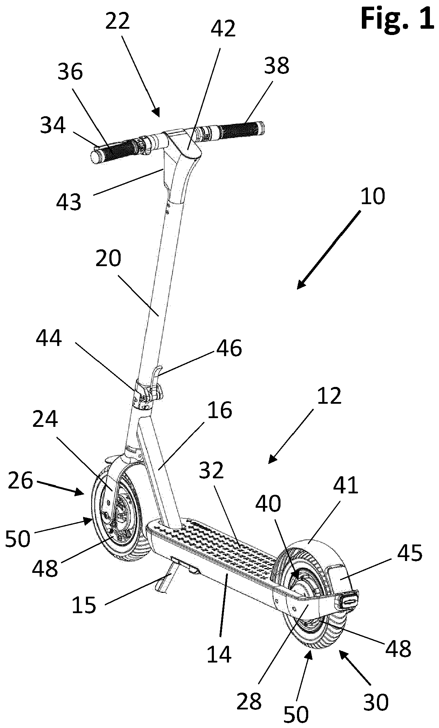

Fig. 1 shows an electric scooter 10 according to the present invention having a scooter body 12 with a horizontal main body 14 carrying at its front a support 16 tilted upwards and carrying a sleeve 18 for a stem 20 carrying at its upper end a handlebar 22 and at its lower end a front fork 24 for a front wheel 26 of the scooter 10. At its rear the main body 14 carries a rear fork 28 holding a rear wheel 30. On the top of the main body 14 a deck 32 is provided for a person to stand on and to operate the scooter. On the side of the main body 14 a kickstand 15 is provided for parking the scooter 10.

The front wheel 26 comprises a disc brake (not shown) which is connected to a brake lever 34. The handlebar 22 comprises two grips 36, 38, from which the right one 38 is a turnable accelerator grip for operating an elevator motor 40 located in the rear wheel 30, which is protected by a mudguard 41, carrying at its rear a rear light 45 and eventually a stop light. In the middle of the handlebar 22 a display 42 is provided to indicate the speed and eventually some other status information of the scooter, as e.g. battery charge level. At the upper end of the stem a head light 43 is located. Below the deck 32 the main body 14 carries a releasably mounted battery (not shown) as well as a scooter controller (not shown) for all scooter functions, the uppermost part of it being a motor controller.

For a better transportability the scooter comprises a folding mechanism 44 with a quick release lever 46 via which the stem 20 above the support 16 can be folded backwards to the main body 14.

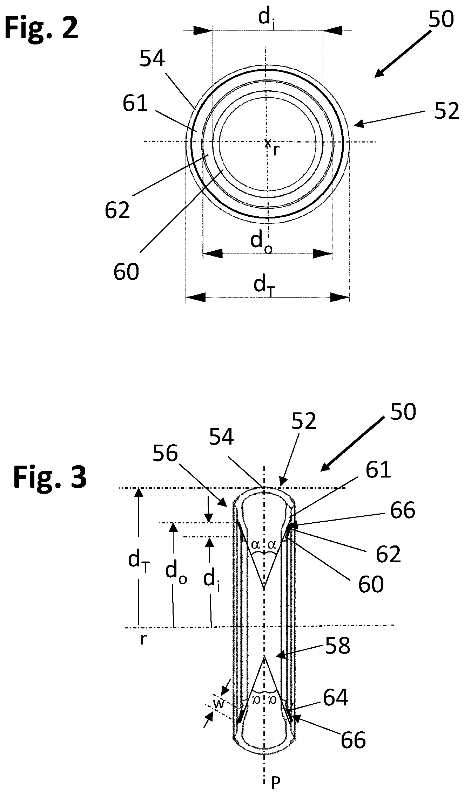

The front wheel 26 as well as the rear wheel 30 of the e-scooter 10 comprise in a per se well known manner a rim well 48 for the mounting of a tire 50. The tire 50 is embodied according to the present invention and is described more detailed in Figs. 2 and 3.

Fig. 2 is a side view of the inventive tire 50 without the corresponding wheel 26, 30 while Fig. 3 shows a perspective and partly sectioned view of the tire 50 according Figs. 1 and 2 of the electric scooter 10.

The tire 50 has a tire body 52 with a rounded tread 54 and side walls 56, 58 which extend on both sides thereof in direction to the rotational axis r of the tire and end in beads 60, which might comprise some textile or steel reinforcement for the tire to be mounted on the rim well 48 of the e-scooter wheels 26, 30.

Each side wall 56, 58 comprises an outer side wall portion 61 connected to the tread 54, which extends nearly vertically. The outer side wall portion 61 is connected to an inner side wall portion 62 which is configured to carry the reflective area 64. The inner side wall portion 62 extends in an angle of 5 to 30 degrees, particularly 10 to 30 degrees to the tire plane P. The reflective area 64 located on the inner side wall portion 62 extends from an inner diameter dᵢ to an outer diameter dₒ and has a width w.

The outer diameter dₒ is at least 75% of the total tire diameter d_{T}. The inner diameter dᵢ is at most 70% of the tire diameter d_{T}. The corresponding width w is between 5 and 30 mm, preferably between 10 and 20 mm, most preferably around 15 mm. As it has been mentioned above the size of the e-scooter tire is between 20 and 32 cm, which corresponds to the 8 to 12 inch.

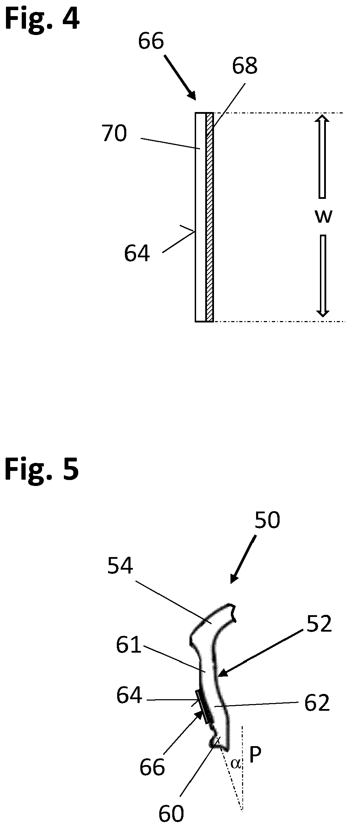

Of course, the reflective area 64 can be applied to the inner side wall portion as a coating via per se known application techniques as e.g. spraying or painting. Preferably, the reflective area 64 is provided on the inner side wall portion 62 via a reflective tape 66, which is adhered to the inner side wall portion 62 and which is more detailed shown in Figs. 4 and 5.

As it can be seen in Fig. 4 the reflective tape 66 comprises a carrier layer embodied as a fabric backing 68 to which is layer of at least 60% glass beads 70 is bonded via PU resin, which glass bead layer 70 constitute on its surface the reflective area 64. The tape preferably also comprises a colour material which is preferably arranged in connection with the PU resin. The fabric backing 68 comprises at least 30% cotton and at least 30% polyester, preferably at least 50% polyester to provide the required physical carrier properties of the tape.

The reflective tape 66 is adhered to the inner side wall portion 62 via a per se known adhesive, as it is shown in Fig. 5.

It should be clear for the skilled person that the dimensions in the drawings, particularly the dimension of the reflective tape 66 do not correspond to the real dimensions. In reality the thickness of the tape 66 is much thinner than shown.

The invention is not limited by the above description of a preferred embodiment but may be varied within the scope of the appended patent claims.

### List of reference numbers:

- 10: electric scooter
- 12: scooter body
- 14: main body
- 15: kickstand
- 16: support
- 18: sleeve
- 20: stem
- 22: handlebar
- 24: front fork
- 26: front wheel
- 28: rear fork
- 30: rear wheel
- 32: deck
- 34: brake lever
- 36: left grip
- 38: right turnable accelerator grip
- 40: scooter motor (brushless DC motor)
- 41: mudguard
- 42: display
- 43: head light - front light
- 44: folding mechanism
- 45: rear light
- 46: quick release lever of the folding mechanism
- 48: rim well of the scooter wheel
- 50: tire
- 52: tire body
- 54: tread
- 56: first side wall of the tire
- 58: second side wall of the tire
- 60: bead
- 61: outer side wall portion
- 62: inner side wall portion carrying the reflective area
- 64: reflective area (on reflective tape or coated on the inner side wall portion)
- 66: reflective tape
- 68: fabric backing of the tape - carrier layer
- 70: reflective material (glass beads bonded with PU bonding to fabric backing)
- r: rotational axis of the tire
- α: angle of the reflective area/reflective tape/inner side wall portion with respect to the tire plane P
- P: tire plane
- d_{T}: tire diameter
- dₒ,: outer diameter of the reflective area
- dᵢ: inner diameter of the reflective area
- w: width of the reflective area

## Claims

1. E-Scooter tire (50) having an outer diameter (d_{T}) between 20 cm and 32 cm and comprising a rubber body (52) with a tread (54), side walls (56, 58) and beads (60), whereby the side walls (56, 58) comprise a reflective area (64),
**characterized in that** the outer diameter (dₒ) of the reflective area is larger than 75% of the tire diameter (d_{T}),
that the inner diameter (dᵢ) of the reflective area is at most 70% of the tire diameter (d_{T}),
that the width (w) of the reflective area (64) is at least 5 mm,
that a side wall portion (62) of the side walls (56, 58) carrying the reflective area (64) extends within an angle range (α) of -30 to 30 degrees to the tire plane (P),
and that the size of the reflective area (64) is at least 3000 mm² for each side wall (56, 58).

2. Tire according to claim 1, **characterized in that** the width (w) of the reflective area (64) is between 5 and 30 mm, preferably between 10 mm and 30 mm, particularly between 10 mm and 20 mm.

3. Tire according to one of the preceding claims, **characterized in that** the reflective area (64) is located on a tape (66) which is connected to the side walls (56, 58) of the tire (50) via an adhesive or chemical bonding.

4. Tire according to claim 3, **characterized in that** the tape (66) comprises a fabric backing (68) comprising at least 30% cotton and at least 30% polyester.

5. Tire according to claim 4, **characterized in that** the tape (66) comprises a reflective material, the surface thereof comprising at least 60% glass beads (70) forming the reflective area (64).

6. Tire according to claim 5, **characterized in that** the glass beads (70) are bonded to the fabric backing (68) with a bonding comprising least 80% polyurethane resin.

7. Tire according to one of the preceding claims, **characterized in that** at least the side walls (56, 58) of the tire body (58) are made of black rubber.

8. E-Scooter (10) comprising a scooter body (12) with two wheels (26, 30), having rim wells (48) for the mounting of a tire (50), **characterized in that** in the rim wells (48) tires (50) according to one of the preceding claims are mounted.

9. E-Scooter (10) according to claim 8, wherein the tires comprise side walls (62) to each of which a reflective tape (66) is bonded.
